# EUROPÄISCHE PATENTANMELDUNG

(11) **EP 4 527 615 A1**
(43) Veröffentlichungstag der Anmeldung: **26.03.2025**
(21) Anmeldenummer: 24201712.7
(22) Anmeldetag: 20.09.2024
(51) Int. Cl.: B32B 5/26, B32B 5/02, B32B 7/02, B32B 7/03, B32B 7/05

(54) **MEHRSCHICHTIGER SCHALLABSORGER, VERFAHREN ZUR HERSTELLUNG EINES MEHRSCHICHTIGEN SCHALLABSORBERS UND VERWENDUNG EINES MEHRSCHICHTIGEN SCHALLABSORBERS**

(30) Priorität: 20.09.2023 DE 102023125511
(71) Anmelder: Sandler AG, 95126 Schwarzenbach/Saale (DE)
(72) Erfinder: Herrmann, Stefan, 95182 Döhlau (DE)
(74) Vertreter: Grünecker Patent- und Rechtsanwälte PartG mbB

(57) **Zusammenfassung**

Die Erfindung betrifft einen mehrschichtigen Schallabsorber umfassend ein Strömungsvlies mit mindesten zwei Strömungseinzellagen, wobei die Strömungseinzellagen in einer Durchdringungsrichtung der zu absorbierenden Schallwellen übereinander angeordnet sind und jeweils einen Strömungswiderstand zwischen 300 Pa s/m und 1.800 Pa s/m, vorzugsweise zwischen 400 Pa s/m und 1.500 Pa s/m, aufweisen, wobei der Strömungswiderstand der jeweiligen Strömungseinzellage von Strömungseinzellage zu Strömungseinzellage in der Durchdringungsrichtung zunimmt. Daneben betrifft die Erfindung ein Verfahren zur Herstellung des erfindungsgemäßen mehrschichtigen Schallabsorbers und eine Verwendung des erfindungsgemäßen mehrschichtigen Schallabsorbers zur Schallabsorption im Automobilbereich, sowie im Bau- und Raumakustikbereich.

## Beschreibung

Die Erfindung bezieht sich auf einen mehrschichtigen Schallabsorber gemäß Anspruch 1. Daneben bezieht sich die Erfindung auf ein Verfahren zur Herstellung eines mehrschichtigen Schallabsorbers gemäß Anspruch 13 und Verwendungen des mehrschichtigen Schallabsorbers gemäß Anspruch 14 und Anspruch 15.

Für die Steigerung der Schallabsorption eines mehrschichtigen Schallabsorbers ist die Erhöhung der Dicke und die Erhöhung des Strömungswiderstands bekannt. Daneben sind, wie aus der EP 3 375 923 A1 bekannt, mehrschichtige Schallabsorber bekannt, die eine Lage aus Strömungsvlies mit einem hohen Strömungswiderstand neben einer weiteren Lage aufweisen, über die sich eine vorteilhafte Schallabsorption ergibt.

Es hat sich aber gezeigt, dass die bekannten mehrschichtigen Schallabsorber und die bekannten Wege der Schallabsorptionserhöhung insbesondere für tiefe Frequenzen zwischen 400 und 1250 Hz bei einer limitierten Produktdicke verbesserungsdürftig sind. Die verbesserte Schallabsorption in dem tiefen Frequenzbereich ist insbesondere auch in der Automobilbranche und hier im Bereich der E-Mobilität von großer Bedeutung, da die Abrollgeräusche der Reifen in diesem tiefen Frequenzbereich liegen und diese nicht von der Geräuschkulisse des Verbrennungsmotors und des Schalt- beziehungsweise Automatikgetriebes maskiert werden. In diesen Bereich ist daneben die Produktdicke des mehrschichtigen Schallabsorbers aufgrund des beschränkten Bauraums sehr limitiert.

Entsprechend ist die Aufgabe der Erfindung einen mehrschichtigen Schallabsorber bereitzustellen, der unter Berücksichtigung einer limitierten Produktdicke eine verbesserte Schallabsorption im tiefen Frequenzbereich zwischen 400 und 1250 Hz ermöglicht.

Die Aufgabe wird gelöst durch die Merkmale des unabhängigen Anspruchs 1. Demnach liegt dann eine erfindungsgemäße Lösung der Aufgabe vor, wenn der mehrschichtige Schallabsorber ein Strömungsvlies mit mindestens zwei Strömungseinzellagen umfasst, wobei die Strömungseinzellagen in einer Durchdringungsrichtung der zu absorbierenden Schallwellen übereinander angeordnet sind und jeweils einen Strömungswiderstand zwischen 300 Pa s/m und 1.800 Pa s/m, vorzugsweise zwischen 400 Pa s/m und 1.500 Pa s/m, aufweisen, wobei der Strömungswiderstand der jeweiligen Strömungseinzellage von Strömungseinzellage zu Strömungseinzellage in der Durchdringungsrichtung zunimmt.

Durch den sich in Durchdringungsrichtung steigernden Strömungswiderstand der Strömungseinzellagen des Strömungsvlieses des Schallabsorbers kann überraschender Weise die Schallabsorption im tiefen Frequenzbereich bei einer gleichbleibenden Gesamtproduktdicke deutlich verbessert werden.

Gleichzeitig hat sich überraschender Weise gezeigt, dass sich auch in sehr hohen Frequenzbereichen, über 4000 Hz, eine Verbesserung der Schallabsorption bei einer gleichbleibenden Gesamtproduktdicke durch den erfindungsgemäßen mehrschichtigen Schallabsorber einstellt.

Vorteilhafte Ausführungsformen der vorliegenden Erfindung sind Gegenstand der Unteransprüche.

Gemäß einer besonders bevorzugten Ausführungsform der vorliegenden Erfindung liegt ein Unterschied zwischen den Strömungswiderständen direkt übereinander angeordneter Strömungseinzellagen zwischen 300 und 1.500 Pa s/m, vorzugsweise zwischen 500 und 1.000 Pa s/m. Durch den sprunghaften Anstieg des Strömungswiderstands in den genannten Bereichen ergibt sich eine besonders vorteilhafte Schallabsorption im tiefen Frequenzbereich.

In einer weiteren besonders bevorzugten Ausführungsform der vorliegenden Erfindung weist eine in Durchdringungsrichtung erste Strömungseinzellage einen Strömungswiderstand von mindestens 400 Pa s/m, vorzugsweise einen Strömungswiderstand zwischen 400 und 700 Pa s/m, auf, und eine in Durchdringungsrichtung direkt daran angrenzende zweite Strömungseinzellage einen um mindestens 400 Pa s/m höheren Strömungswiderstand, vorzugsweise einen zwischen 500 und 1.100 Pa s/m höheren Strömungswiderstand, auf, wobei der Strömungswiderstand der zweiten Strömungseinzellage vorzugsweise zwischen 900 und 1700 Pa s/m liegt. Eine derartige erste Strömungseinzellage und zweite Strömungseinzellage ermöglichen eine besonders vorteilhafte Schallabsorption des mehrschichtigen Schallabsorbers.

Gemäß einer weiteren bevorzugten Ausführungsform weisen die Strömungseinzellagen ein Flächengewicht zwischen 20 und 100 g/m², vorzugsweise zwischen 35 und 85 g/m², auf. Bei diesem Flächengewicht kann zum einen der nötige Strömungswiderstand der Strömungseinzellagen und die gewünschte Dicke vorteilhaft erreicht werden.

Gemäß einer weiteren bevorzugten Ausführungsform weisen die Strömungseinzellagen eine Dicke zwischen 0,1 und 1 mm, vorzugsweise zwischen 0,3 und 0,6 mm, auf. Dies ermöglicht ein geringe Gesamtdicke des mehrschichtigen Schallabsorbers und gleichzeitig eine gute Schalabsorption.

In einer weiteren besonders bevorzugten Ausführungsform der vorliegenden Erfindung sind die Strömungseinzellagen Melt-Blown Vliese, wobei mindestens eine der Strömungseinzellagen als Melt-Blown Vlies ohne Träger und ohne Kalander hergestellt ist. Auf diese Weise können die Strömungseinzellagen vorteilhafter Weise hergestellt werden. Gleichzeitig erlaubt dieses Fertigungsverfahren eine genaue Einstellung des hohen Strömungswiderstands der Strömungseinzellagen. Vorzugsweise sind die Strömungseinzellagen mit einem Spinnbalken mit 30 bis 80 hpi, besonders bevorzugt mit 50 hpi, hergestellt. hpi ist dabei die Einheit "holes per inch".

Gemäß einer besonders bevorzugten Ausführungsform umfasst das Strömungsvlies zwei Strömungseinzellagen, wobei eine erste Strömungseinzellage als Melt-Blown Vlies mit einem Flächengewicht von 40g/m², einer Dicke zwischen 0,43 und 0,47mm und einem Strömungswiderstand von 500 Pa s/m ausgebildet ist, und eine zweite Strömungseinzellage als Melt-Blown Vlies mit einem Flächengewicht von 80g/m², einer Dicke zwischen 0,53 und 0,57mm und einem Strömungswiderstand von 1500 Pa s/m ausgebildet ist. Das derartige Strömungsvlies ermöglicht eine verbesserte Schallabsorption im tiefen Frequenzbereich des mehrschichtigen Schallabsorbers.

Gemäß einer weiteren bevorzugten Ausführungsform umfasst das Strömungsvlies ein Schutzvlies gegen mechanischen Abrieb, das eine in Durchdringungsrichtung erste Lage des Strömungsvlieses bildet und einen geringeren Strömungswiderstand wie die Strömungseinzellagen aufweist. Dadurch können die Strömungseinzellagen gegen mechanischen Abrieb geschützt werden, ohne dass die Schallabsorption des mehrschichtigen Schallabsorbers beeinträchtigt wird. Vorzuweise ist das Schutzvlies ein Spinnvlies oder ein Melt-Blown Vlies mit vollflächiger Kalandrierung. Dies sind zwei vorteilhafte Herstellungsvarianten, durch die das Schutzvlies hergestellt werden kann. Weiter vorzugsweise ist das Schutzvlies mit einem geringen Strömungswiderstand unter 500 Pa s/m, besonders bevorzugt unter 200 Pa s/m, ausgebildet. Durch den geringen Strömungswiderstand des Schutzvlieses gelangen die Schallwellen in Durchdringungsrichtung zu den Strömungseinzellagen, in denen dann die besonders vorteilhafte Schallabsorption erfolgt.

In einer weiteren bevorzugten Ausführungsform umfasst das Strömungsvlies mindestens drei Strömungseinzellagen, wobei der Unterschied zwischen den Strömungswiderständen aneinander angrenzender Strömungseinzellagen in Durchdringungsrichtung abnimmt. Die Abnahme des Unterschieds zwischen den Strömungswiderständen aneinander angrenzender Strömungseinzellagen in Durchdringungsrichtung ist vorteilhaft.

Gemäß einer besonders bevorzugten Ausführungsform sind die Strömungseinzellagen des Strömungsvlieses nur bereichsweise miteinander verbunden, sodass Kavitäten zwischen den Strömungseinzellagen bestehen. Es hat sich gezeigt, dass durch die Kavitäten zwischen den Strömungseinzellagen die Schallabsorption im tiefen Frequenzbereich zusätzlich verbessert werden kann. Vorzugsweise sind die Strömungseinzellagen mittels eines Kalander verbunden, der eine Verpressfläche von 0,3 bis 5%, noch bevorzugter von 0,4 bis 3%, und noch bevorzugter von 0,6 bis 1,2 %, aufweist, wobei die Strömungseinzellagen des Strömungsvlieses weitervorzugsweise an voneinander beabstandeten Gravurpunkten, die ein Muster bilden, durch den Kalander verbunden sind. Dadurch lassen sich Kavitäten in einem Umfang bilden, die eine zusätzliche Verbesserung der Schallabsorption ermöglichen.

Gemäß einer anderen bevorzugten Ausführungsform sind das Schutzvlies und die Strömungseinzellagen des Strömungsvlieses nur bereichsweise miteinander verbunden, sodass Kavitäten zwischen dem Schutzvlies und den Strömungseinzellagen und zwischen den Strömungseinzellagen bestehen. Es hat sich gezeigt, dass durch die Kavitäten die Schallabsorption im tiefen Frequenzbereich zusätzlich verbessert werden kann. Vorzugsweise sind das Schutzvlies und die Strömungseinzellagen mittels eines Kalander verbunden sind, der eine Verpressfläche von 0,3 bis 5%, noch bevorzugter von 0,4 bis 3%, und noch bevorzugter von 0,6 bis 1,2 %, aufweist, wobei das Schutzvlies und die Strömungseinzellagen des Strömungsvlieses weitervorzugsweise an voneinander beabstandeten Gravurpunkten, die ein Muster bilden, durch den Kalander verbunden sind. Dadurch lassen sich Kavitäten in einem Umfang bilden, die eine zusätzliche Verbesserung der Schallabsorption ermöglicht.

Vorzugsweise bilden die Gravurpunkte, erzeugt durch den Kalander, in den zwei oberhalb beschrieben Ausführungsformen ein Rautenmuster, Vierecksmuster, Kreismuster oder Polygonmuster, wobei das Rautenmuster besonders bevorzugt ist. Weitervorzugsweise weisen die Gravurpunkte einen Durchmesser zwischen 0,5 und 3mm, vorzugsweise zwischen 1,4 und 2,4 mm, auf und/oder weisen einen Mindestabstand zwischen sich von 5 bis 20mm, vorzugsweise zwischen 8 und 15 mm, auf.

In einer weiteren bevorzugten Ausführungsform weist der mehrschichtige Schallabsorber neben dem Strömungsvlies ein Trägervlies auf, wobei das Trägervlies in Durchdringungsrichtung auf eine Rückseite des Strömungsvlieses kaschiert ist und zumindest erste Fasern mit einem Titer von 3 bis 28 dtex und zweite Fasern mit einem Titer von 0,5 bis 3 dtex umfasst. Vorzugsweise besteht das Trägervlies aus einer Fasermischung von Fasern mit 0,5 dtex bis 28 dtex. Ein derartiges Trägervlies ermöglicht im Zusammenspiel mit dem Strömungsvlies eine besonders gute Schallabsorption im tiefen Frequenzbereich bei einer gleichzeitigen geringen Produktdicke.

Gemäß einer bevorzugten Ausführungsform ist das Trägervlies thermisch verfestigt und/oder mechanisch verfestigt und/oder weist ein Flächengewicht zwischen 200 und 1.200 g/m², vorzugsweise zwischen 200 und 600 g/m², auf. Die Eigenschaften derartiger Trägervliese haben in Kombination mit dem Strömungsvlies einen positiven Effekt auf die Eigenschaften des mehrschichtigen Schallabsorbers.

Vorzugsweise weist das Trägervlies eine Dicke von 4 bis 50 mm, bevorzugt von 8 bis 35 mm, weiter bevorzugt von 8 bis 25 mm, auf. Ein derartiger mehrschichtiger Schallabsorber mit einem derartigen Trägervlies in Kombination mit dem Strömungsvlies hat eine vorteilhafte Schallabsorption im tiefen Frequenzbereich und hat gleichzeitig eine derartige Dicke, die den mehrschichtigen Schallabsorber vorteilhafter Weise in begrenzten Bauräumen einsetzbar macht.

Gemäß einer bevorzugten Ausführungsform besteht der mehrschichtige Schallabsorber aus nur einem Ausgangsmaterial, vorzugsweise aus PET oder PBT. Derartige Sortenreinheit ist aus Gründen der Recyclingmöglichkeit und Entsorgungsfreundlichkeit vorteilhaft.

In einer weiteren besonders bevorzugten Ausführungsform weist der mehrschichtige Schallabsorber eine Gesamtdicke zwischen 5 und 50 mm, vorzugsweise zwischen 8 und 35 mm, besonders bevorzugt zwischen 10 und 25 mm, auf. Ein derartiger mehrschichtiger Schallabsorber ist für den begrenzten Bauraum, insbesondere im Automobilbereich, besonders geeignet und lässt auch bei einem geringen verwendbaren Bauraum eine vorteilhafte Schallabsorption im tiefen Frequenzbereich zu.

Daneben ist die Erfindung auch auf ein Verfahren zur Herstellung eines mehrschichtigen Schallabsorbers gemäß einem der oberhalb beschriebenen Ausführungsbeispiele gerichtet, wobei die Strömungseinzellagen des Strömungsvlieses nach ihrer Fertigung in der Durchdringungsrichtung übereinander angeordnet werden. Auf diese Weise lässt sich ein vorteilhafter mehrschichtiger Schallabsorber herstellen.

Gemäß einem vorteilhaften Ausführungsbeispiel des erfindungsgemäßen Verfahrens werden die Strömungseinzellagen des Strömungsvlieses nur bereichsweise miteinander verbunden, sodass Kavitäten zwischen den Strömungseinzellagen entstehen. Vorzugsweise werden die Strömungseinzellagen mittels eines Kalander verbunden, der eine Verpressfläche von 0,3 bis 10%, noch bevorzugter von 0,4 bis 5%, und noch bevorzugter von 0,6 bis 1,2 %, aufweist, wobei der Kalander weitervorzugsweise ein Rauten-Kalander ist. Besonders bevorzugt wird auch das Schutzvlies mit den Strömungseinzellagen des Strömungsbriefes auf die gleiche bereichsweise Art im gleichen Arbeitsschritt verbunden.

In einer weiteren bevorzugten Ausführungsform des erfindungsgemäßen Verfahrens werden die Strömungseinzellagen des Strömungsvlieses als Melt-Blown Vlies ohne Träger und ohne Kalander hergestellt. Vorzugsweise werden die Strömungseinzellagen mit einem Spinnbalken mit 30 bis 80 hpi hergestellt. Auf diese Weise lassen sich Strömungseinzellagen mit entsprechenden Strömungswiderständen auf vorteilhafte Weise herstellen.

Gemäß einer weiteren bevorzugten Ausführungsform wird das Trägervlies parallel zum Strömungsvlies hergestellt, wobei das Trägervlies vorzugsweise thermisch verfestigt und nicht genadelt ist. Gemäß einer weiteren bevorzugten Ausführungsform wird das Trägervlies als letzter Schritt des Herstellungsverfahrens auf das Strömungsvlies einseitig kaschiert. Vorzugsweise kommt dabei als Haftvermittler ein Klebevlies aus demselben Ausgangsmaterial zum Einsatz, aus dem auch das Strömungsvlies und das Trägervlies hergestellt ist.

Daneben ist die Erfindung zusätzlich auf die Verwendung eines mehrschichtigen Schallabsorbers gemäß einem der oberhalb beschriebenen Ausführungsbeispiele zur Schallabsorption im Automobilbereich gerichtet. Durch die hervorragende Schallabsorption im tiefen Frequenzbereich und der dafür nötigen geringen Dicke des mehrschichtigen Schallabsorbers ist dieser hervorragend zur Schallabsorption im Automobilbereich geeignet. Besonders bevorzugt wird der mehrschichtige Schallabsorber gemäß der Erfindung für den Bereich der Elektromobilität verwendet. In diesem Bereich spielen die Abrollgeräusche der Reifen eine hervorgehobene Rolle bei der Fahrzeugakustik im Innenraum, da die maskierende Geräuschkulisse des Verbrennungsmotors und des Schalt- bzw. Automatikgetriebes fehlt. Diese Abrollgeräusche liegen insbesondere im tiefen Frequenzbereich, sodass die vorteilhaften Eigenschaften des erfindungsgemäßen mehrschichtigen Schallabsorbers besonders hervortreten.

Zusätzlich ist die Erfindung auf die Verwendung eines mehrschichtigen Schallabsorbers gemäß einem der oberhalb beschriebenen Ausführungsbeispiele zur Schallisolierung im Bau- und Raumakustik-Bereich gerichtet. Dabei ist insbesondere auch die verbesserte Schallabsorption im hohen Frequenzbereich, über 4000 Hz, vorteilhaft.

Ausführungsbeispiele der vorliegenden Erfindung werden im Folgenden anhand von Zeichnungen näher erläutert.

Die Figuren zeigen:
- Figur 1: eine schematische Schnittansicht durch ein erstes Ausführungsbeispiel eines erfindungsgemäßen mehrschichtigen Schallabsorbers,
- Figur 2: eine schematische Fertigungsstraße eines Strömungsvlieses des ersten Ausführungsbeispiels eines erfindungsgemäßen mehrschichten Schallabsorbers,
- Figur 3: eine schematische Ansicht auf in Durchdringungsrichtung erste Schicht des ersten Ausführungsbeispiels eines erfindungsgemäßen mehrschichten Schallabsorbers,
- Figur 4: Vergleich des Absorptionskoeffizienten gemessen in einer α-Kabine (ISO 354:2003) eines erfindungsgemäßen Ausführungsbeispiels A2 mit den Vergleichsbeispielen V1 und V2,
- Figur 5: Vergleich des Absorptionskoeffizienten gemessen in einer α-Kabine (ISO 354:2003) der erfindungsgemäßen Ausführungsbeispiele A3, A4 und A5 mit den Vergleichsbeispielen V3 und V4, und
- Figur 6: Vergleich des Absorptionskoeffizienten gemessen in einer α-Kabine (ISO 354:2003) des erfindungsgemäßen Ausführungsbeispiels A6 mit dem Vergleichsbeispiel V5.

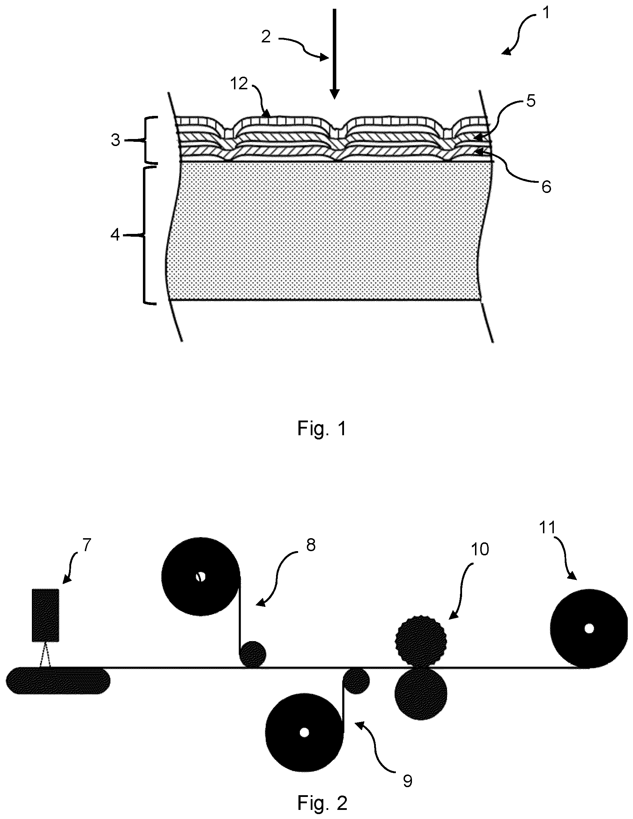

Figur 1 zeigt eine schematische Schnittansicht durch ein erstes Ausführungsbeispiel eines erfindungsgemäßen mehrschichtigen Schallabsorbers 1, wobei die Schnittebene parallel zu einer Durchdringungsrichtung 2 der vom mehrschichtigen Schallabsorber 1 zu absorbierenden Schallwellen ausgerichtet ist. Die Schnittansicht ist nur schematische Natur. So sind die Dicken der einzelnen Schichten nicht maßstabsgetreu dargestellt. Das erste Ausführungsbeispiel des erfindungsgemäßen mehrschichtigen Schallabsorber 1 besteht aus einem Strömungsvlies 3, das in Durchdringungsrichtung 2 vor einem Trägervlies 4 angeordnet ist.

Das Trägervlies 4 ist in diesem Ausführungsbeispiel als Faservlies aus einer Fasermischung, bestehend aus 40% Co-PET Fasern mit einem Fasertiter von 4den und einer Länge von 51mm und aus 60% PET Fasern mit einem Fasertiter von 0,9dtex und einer Länge von 31mm, mit einem Flächengewicht von 400 g/ m² und einer Dicke von 30 mm ausgebildet, wobei das Trägervlies thermisch verfestigt und nicht genadelt ist.

Das Strömungsvlies 3 besteht dabei aus drei übereinander angeordneten Schichten. Dabei ist die in Durchdringungsrichtung 2 erste Schicht gemäß dem ersten Ausführungsbeispiel ein Schutzvlies 12, das den mehrschichtigen Schallabsorber 1 vor mechanischen Abrieb schützt und in diesem Ausführungsbeispiel als PET Spinnvlies mit einem Flächengewicht von 19 g/m² hergestellt ist. Die in Durchdringungsrichtung 2 an das Schutzvlies 12 angrenzende Schicht ist eine erste Strömungseinzellage 5, bei der es sich gemäß diesem Ausführungsbeispiel um ein PET Melt-Blown Vlies mit einem Flächengewicht von 40 g/m², einem Strömungswiderstand von 500 Pa s/m und einer Dicke zwischen 0,43 und 0,57 mm handelt. An die erste Strömungseinzellage 5 grenzt in Durchdringungsrichtung 2 eine zweite Strömungseinzellage 6 an, bei der es sich gemäß diesem Ausführungsbeispiel um ein PET Melt-Blown Vlies mit einem Flächengewicht von 80 g/m², einem Strömungswiderstand von 1500 Pa s/m und einer Dicke zwischen 0,53 und 0,57mm handelt. Die drei Schichten des Strömungsvlieses 3 sind mittels eines Rauten-Kalanders mit einer Verpressfläche von 0,9 % bereichsweise verbunden, sodass sich Kavitäten zwischen den einzelnen Schichten des Strömungsvlieses 3 ausbilden. Bei dem derart ausgebildeten Strömungsvlies 3 steigt der Strömungswiderstand von Schicht zu Schicht sprungweise an. Dies führt in Kombination mit den Kavitäten zwischen den Schichten des Strömungsvlieses 3 und mit dem Trägervlies 4, auf das das Strömungsvlieses 3 einseitig kaschiert ist, zu einer besonders vorteilhaften Schallabsorption in dem tiefen Frequenzbereich zwischen 400 und 1250 Hz.

Figur 2 zeigt eine schematische Fertigungsstraße für ein Strömungsvlieses 3 gemäß dem ersten Ausführungsbeispiel, gezeigt in Figur 1. Gemäß dieser Fertigungsstraße wird an einem Spinnbalken 7 mit 50 hpi die erste Strömungseinzellage 5 mit der Melt-Blown Technik gefertigt. Auf diese erste Strömungseinzellage 5 wird dann in einer ersten Abwickelstation 8 das Schutzvlies 4 aufgelegt und dann in einer zweite Abwickelstation 9 die zweite Strömungseinzellage 6 untergelegt. Die drei derart geschichteten Schichten werden dann in einem Rauten-Kalander 10 mit einer Verpressfläche von 0,9% bereichsweise miteinander verbunden und mittels eines Wicklers 11 aufgewickelt. Das derart hergestellte Strömungsvlieses 3 kann dann in einem nachgelagerten Schritt auf das Trägervlies 4 einseitig kaschiert werden. Hierbei kann zum Beispiel ein Co-PET Klebevlies als Haftvermittler zum Einsatz kommen.

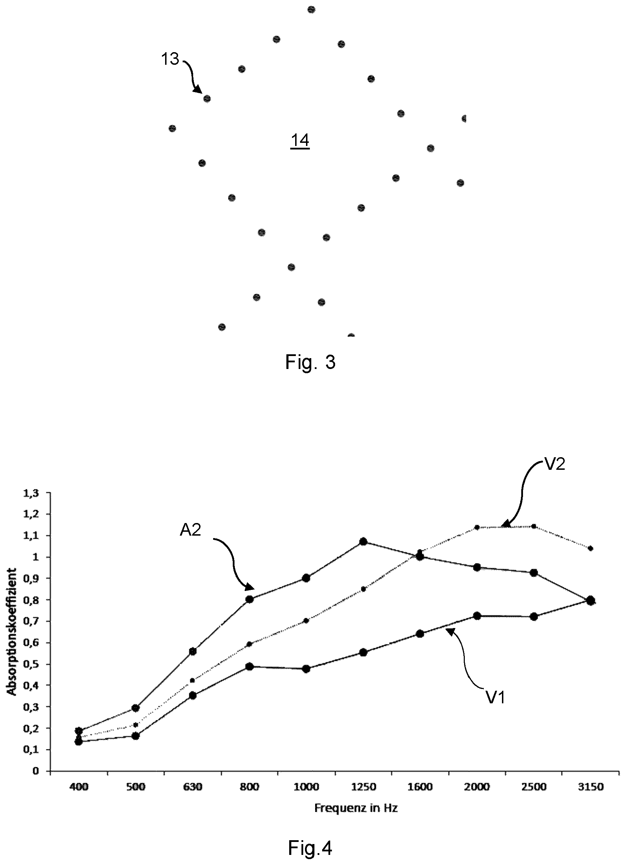

Figur 3 zeigt eine schematische Draufsicht in Durchdringungsrichtung 2 auf das Strömungsvlies 3 gemäß dem ersten Ausführungsbeispiel, gezeigt in Figur 1 und damit auf das Schutzvlies 12. Dieses ist mit den der ersten Strömungseinzellage 5 und der zweite Strömungseinzellage 6 mittels eines Rauten-Kalander 10 verbunden. Der Rauten-Kalander 10 bildet dabei Gravurpunkte 13 in einem rautenförmigen Muster aus. Diese Gravurpunkte 13 sind voneinander beabstandet und bilden durch das Rautenmuster große unverbundene Bereiche 14. Durch die großen unverbundenen Bereiche 14 wird die Schwingung der Lagen des Strömungsvlieses 3 ermöglicht.

Figur 4 zeigt einen Vergleich des Absorptionskoeffizienten über einen Frequenzbereich zwischen 400 und 3150 Hz, gemessen in einer α-Kabine basierend auf ISO 354:2003, eines erfindungsgemäßen Ausführungsbeispiels A2 mit einem Vergleichsbeispiel V1, das nur ein Trägervlies umfasst, und mit einem Vergleichsbeispiel V2, das ein Trägervlies und eine einzelne Strömungseinzellage umfasst.

### Ausführungsbeispiel A2

Der mehrschichtige Schallabsorber gemäß Ausführungsbeispiel A2 besteht aus einem dreilagigen Strömungsvlies und einem Trägervlies. Das Strömungsvlies besteht in Durchdringungsrichtung aus einer ersten Strömungseinzellage aus einem Melt-Blown Vlies mit einem Flächengewicht von 40 g/m², einem Strömungswiderstand von 500 Pa s/m und einer Dicke von 0,32mm, einer zweiten Strömungseinzellage PBT Melt-Blown Vlies mit einem Flächengewicht von 40 g/m², einem Strömungswiderstand von 1064 Pa s/m einer Dicke von 0,34mm und einer dritten Strömungseinzellage aus einem PBT Melt-Blown Vlies mit einem Flächengewicht von 60 g/m², einem Strömungswiderstand von 1389 Pa s/m und einer Dicke von 0,33mm. Das Trägervlies besteht aus einem Faservlies aus 55% PET-BiKO 3den/51mm und 45% PET 0,9den/38mm mit einem Flächengewicht von 250 g/m². Dabei weist der mehrschichtige Schallabsorber gemäß Ausführungsbeispiel A2 eine Gesamtdicke von 15 mm auf.

### Vergleichsbeispiel V1

Das Vergleichsbeispiel V1 besteht aus einem Faservlies aus 55% PET-Biko 3den/51mm und 45% PET 0,9den/38mm mit einem Flächengewicht von 250 g/m² und weist ebenfalls eine Gesamtdicke von 15 mm auf.

### Vergleichsbeispiel V2

Das Vergleichsbeispiel V2 besteht in Durchdringungsrichtung aus einem einlagigen Strömungsvlies aus einem PBT Melt-Blown Vlies mit einem Flächengewicht von 60 g/m², einem Strömungswiderstand von 1389 Pa s/m und einer Dicke von 0,33mm und einem Trägervlies aus einem Faservlies aus 55% PET-Biko 3den/51mm und 45% PET 0,9den/38mm mit einem Flächengewicht von 250 g/m² und weist ebenfalls eine Gesamtdicke von 15 mm auf.

Der Vergleich zeigt eindeutig die erhöhte Schallabsorption des erfindungsgemäßen Ausführungsbeispiels A2 gegenüber den Vergleichsbeispielen V1 und V2 im tiefen Frequenzbereich zwischen 400 und 1250 Hz. Dabei ist die Dicke der drei verglichenen Beispiele dieselbe. Entsprechend ist das erfindungsgemäße Ausführungsbeispiel A2 zur Verwendung als Schallabsorber im tiefen Frequenzbereich gegenüber den Vergleichsbeispielen V1 und V2 vorzuziehen.

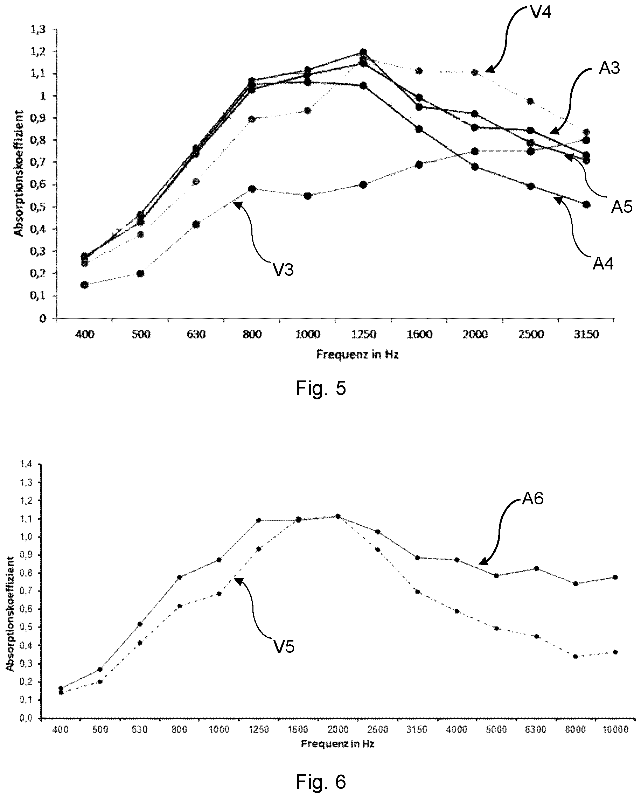

Figur 5 zeigt einen Vergleich des Absorptionskoeffizienten über einen Frequenzbereich zwischen 400 und 3150 Hz gemessen in einer α-Kabine basierend auf ISO 354:2003 drei erfindungsgemäßer Ausführungsbeispiele A3, A4 und A5 mit Vergleichsbeispielen V3 und V4.

### Ausführungsbeispiel A3

Der mehrschichtige Schallabsorber gemäß Ausführungsbeispiel A3 besteht aus einem dreilagigen Strömungsvlies und einem Trägervlies. Das Strömungsvlies besteht in Durchdringungsrichtung aus einer ersten Strömungseinzellage aus einem Melt-Blown Vlies mit einem Flächengewicht von 40 g/m², einem Strömungswiderstand von 500 Pa s/m und einer Dicke von 0,32mm, einer zweiten Strömungseinzellage PET Melt-Blown Vlies mit einem Flächengewicht von 40 g/m², einem Strömungswiderstand von 1064 Pa s/m einer Dicke von 0,34mm und einer dritten Strömungseinzellage aus einem PET Melt-Blown Vlies mit einem Flächengewicht von 60 g/m², einem Strömungswiderstand von 1389 Pa s/m und einer Dicke von 0,33mm . Das Trägervlies besteht aus einem Faservlies aus 20% PET 1,3dtex/38mm, 25% PET Biko 4den/51mm und 55% PET 1,5den/38mm mit einem Flächengewicht von 300 g/m². Dabei weist der mehrschichtige Schallabsorber gemäß Ausführungsbeispiel A3 eine Gesamtdicke von 15 mm auf.

### Ausführungsbeispiel A4

Der mehrschichtige Schallabsorber gemäß Ausführungsbeispiel A4 besteht aus einem dreilagigen Strömungsvlies und einem Trägervlies. Das Strömungsvlies besteht in Durchdringungsrichtung aus einer ersten Strömungseinzellage aus einem PET Melt-Blown Vlies mit einem Flächengewicht von 40 g/m², einem Strömungswiderstand von 1064 Pa s/m und einer Dicke von 0,34mm , einer zweiten Strömungseinzellage PET Melt-Blown Vlies mit einem Flächengewicht von 40 g/m², einem Strömungswiderstand von 2272 Pa s/m einer Dicke von 0,14mm und einer dritten Strömungseinzellage aus einem PET Melt-Blown Vlies mit einem Flächengewicht von 60 g/m², einem Strömungswiderstand von 3125 Pa s/m und einer Dicke von 0,20mm. Das Trägervlies besteht aus einem Faservlies aus 20% PET 1,3dtex/38mm, 25% PET-Biko 4den/51mm und 55% PET 1,5den/38mm mit einem Flächengewicht von 300 g/m². Dabei weist der mehrschichtige Schallabsorber gemäß Ausführungsbeispiel A4 eine Gesamtdicke von 15 mm auf.

### Ausführungsbeispiel A5

Der mehrschichtige Schallabsorber gemäß Ausführungsbeispiel A5 besteht aus einem dreilagigen Strömungsvlies und einem Trägervlies. Das Strömungsvlies besteht in Durchdringungsrichtung aus einer ersten Strömungseinzellage aus einem Melt-Blown Vlies mit einem Flächengewicht von 40 g/m², einem Strömungswiderstand von 500 Pa s/m und einer Dicke von 0,32mm, einer zweiten Strömungseinzellage PET Melt-Blown Vlies mit einem Flächengewicht von 40 g/m², einem Strömungswiderstand von 1064 Pa s/m einer Dicke von 0,34mm und einer dritten Strömungseinzellage aus einem PET Melt-Blown Vlies mit einem Flächengewicht von 60 g/m², einem Strömungswiderstand von 1389 Pa s/m und einer Dicke von 0,33mm. Das Trägervlies besteht aus einem Faservlies aus 40% PET-Biko 4,4dtex/51mm und 60% PET 0,9dtex / 38mm mit einem Flächengewicht von 300 g/m². Dabei weist der mehrschichtige Schallabsorber gemäß Ausführungsbeispiel A5 eine Gesamtdicke von 15 mm auf.

### Vergleichsbeispiel V3

Das Vergleichsbeispiel V3 besteht aus einem Faservlies aus 20% PET 1,3dtex/38mm, 25% PET-Biko 4den/51mm und 55% PET 1,5den/38mm mit einem Flächengewicht von 300 g/m² und weist ebenfalls eine Gesamtdicke von 15 mm auf.

### Vergleichsbeispiel V4

Das Vergleichsbeispiel V4 besteht in Durchdringungsrichtung aus einem einlagigen Strömungsvlies aus einem PET Melt-Blown Vlies mit einem Flächengewicht von 80 g/m², einem Strömungswiderstand von 1550 Pa s/m und einer Dicke von 0,56mm und einem Trägervlies aus einem Faservlies aus 20% PET 1,3dtex/38mm, 25% PET - Biko 4den/51mm und 55% PET 1,5den/38mm mit einem Flächengewicht von 300 g/m² und weist ebenfalls eine Gesamtdicke von 15 mm auf.

Der in Figur 5 gezeigte Vergleich zeigt ebenfalls die erhöhte Schallabsorption der erfindungsgemäßen Ausführungsbeispiele A3, A4 und A5 gegenüber den Vergleichsbeispielen V3 und V4 im tiefen Frequenzbereich zwischen 400 und 1250 Hz.

Figur 6 zeigt einen Vergleich des Absorptionskoeffizienten über einen Frequenzbereich zwischen 400 und 10000 Hz, gemessen in einer α-Kabine basierend auf ISO 354:2003, eines erfindungsgemäßen Ausführungsbeispiels A6 mit einem Vergleichsbeispiel V6, das ein Trägervlies und eine einzelne Strömungseinzellage umfasst.

### Ausführungsbeispiel A6

Der mehrschichtige Schallabsorber gemäß Ausführungsbeispiel A6 besteht aus einem dreilagigen Strömungsvlies und einem Trägervlies. Das Strömungsvlies besteht in Durchdringungsrichtung aus einem Schutzvlies in der Form eines Spinnvlies mit einem Flächengewicht von 19 g/m², einem Strömungswiderstand von < 200 Pa s/m und einer Dicke von 0,10 mm, einer ersten Strömungseinzellage PBT Melt-Blown Vlies mit einem Flächengewicht von 40 g/m², einem Strömungswiderstand von 500 Pa s/m und einer Dicke von 0,45 mm und einer zweiten Strömungseinzellage aus einem PBT Melt-Blown Vlies mit einem Flächengewicht von 80 g/m², einem Strömungswiderstand von 1500 Pa s/m und einer Dicke von 0,56 mm. Das Trägervlies besteht aus einem Faservlies aus 70% PET Biko 4den/51mm, 20%PET 12den/64mm und 10% PET 11dtex/60mm Hohlfaser mit einem Flächengewicht von 1000 g/m² und einem Strömungswiderstand von 256 Pa s/m. Dabei weist der mehrschichtige Schallabsorber gemäß Ausführungsbeispiel A6 eine Gesamtdicke von 12 mm auf.

### Vergleichsbeispiel V5

Das Vergleichsbeispiel V5 besteht in Durchdringungsrichtung aus einem einlagigen Strömungsvlies aus einem PBT Melt-Blown Vlies mit einem Flächengewicht von 80 g/m², einem Strömungswiderstand von 5350 Pa s/m und einer Dicke von 0,22 mm und einem Trägervlies aus einem Faservlies aus 70% PET Biko 4den/51mm, 20% PET 12den/64mm und 10% PET 11dtex/60mm Hohlfaser mit einem Flächengewicht von 1000 g/m² und einem Strömungswiderstand von 256 Pa s/m und weist ebenfalls eine Gesamtdicke von 12 mm auf.

Der Vergleich zeigt eindeutig die erhöhte Schallabsorption des erfindungsgemäßen Ausführungsbeispiels A6 gegenüber dem Vergleichsbeispiel V5 im tiefen Frequenzbereich zwischen 400 und 1250 Hz. Gleichzeitig zeigt der Vergleich aber auch die deutlich erhöhte Schallabsorption des erfindungsgemäßen Ausführungsbeispiels A6 gegenüber dem Vergleichsbeispiel V5 im sehr hohen Frequenzbereich zwischen 4000 und 10000 Hz. Dabei ist die Dicke der verglichenen Beispiele dieselbe. Entsprechend ist das erfindungsgemäße Ausführungsbeispiel A6 zur Verwendung als Schallabsorber im tiefen Frequenzbereich und sehr hohen Frequenzbereich gegenüber dem Vergleichsbeispiel V5 vorzuziehen.

### Bezugszeichenliste

- 1: mehrschichtigen Schallabsorbers
- 2: Durchdringungsrichtung
- 3: Strömungsvlies
- 4: Trägervlies
- 5: erste Strömungseinzellage
- 6: zweite Strömungseinzellage
- 7: Spinnbalken
- 8: ersten Abwickelstation
- 9: zweite Abwickelstation
- 10: Rauten-Kalander
- 11: Wickler
- 12: Schutzvlies
- 13: Gravurpunkt
- 14: unverbundene Bereiche
- A2: zweites Ausführungsbeispiel
- A3: drittes Ausführungsbeispiel
- A4: viertes Ausführungsbeispiel
- A5: fünftes Ausführungsbeispiel
- V1: erstes Vergleichsbeispiel
- V2: zweite Vergleichsbeispiel
- V3: drittes Vergleichsbeispiel
- V4: viertes Vergleichsbeispiel

## Patentansprüche

1. Mehrschichtiger Schallabsorber umfassend ein Strömungsvlies mit mindesten zwei Strömungseinzellagen, wobei die Strömungseinzellagen in einer Durchdringungsrichtung der zu absorbierenden Schallwellen übereinander angeordnet sind und jeweils einen Strömungswiderstand zwischen 300 Pa s/m und 1.800 Pa s/m, vorzugsweise zwischen 400 Pa s/m und 1.500 Pa s/m, aufweisen, wobei der Strömungswiderstand der jeweiligen Strömungseinzellage von Strömungseinzellage zu Strömungseinzellage in der Durchdringungsrichtung zunimmt.

2. Mehrschichtiger Schallabsorber gemäß Anspruch 1, **dadurch gekennzeichnet, dass** ein Unterschied zwischen den Strömungswiderständen direkt übereinander angeordneter Strömungseinzellagen zwischen 300 und 1.500 Pa s/m, vorzugsweise zwischen 500 und 1.000 Pa s/m, liegt.

3. Mehrschichtiger Schallabsorber gemäß Anspruch 1 oder 2, **dadurch gekennzeichnet, dass** eine in Durchdringungsrichtung erste Strömungseinzellage einen Strömungswiderstand von mindestens 400 Pa s/m, vorzugsweise einen Strömungswiderstand zwischen 400 und 700 Pa s/m, aufweist, und eine in Durchdringungsrichtung direkt daran angrenzende zweite Strömungseinzellage einen um mindestens 400 Pa s/m höheren Strömungswiderstand, vorzugsweise einen zwischen 500 und 1.100 Pa s/m höheren Strömungswiderstand, aufweist, wobei der Strömungswiderstand der zweiten Strömungseinzellage vorzugsweise zwischen 900 und 1700 Pa s/m liegt.

4. Mehrschichtiger Schallabsorber gemäß einem der Ansprüche 1 bis 3, **dadurch gekennzeichnet, dass** die Strömungseinzellagen ein Flächengewicht zwischen 20 und 100 g/m², vorzugsweise zwischen 35 und 85 g/m², aufweisen und/oder die Strömungseinzellagen eine Dicke zwischen 0,1 und 1 mm, vorzugsweise zwischen 0,3 und 0,7 mm, aufweisen

5. Mehrschichtiger Schallabsorber gemäß einem der Ansprüche 1 bis 4, **dadurch gekennzeichnet, dass** die Strömungseinzellagen Melt-Blown Vliese sind, wobei mindestens eine der Strömungseinzellagen als Melt-Blown Vlies ohne Träger und ohne Kalander hergestellt ist, wobei die Strömungseinzellagen vorzugsweise mit einem Spinnbalken mit 30 bis 80 hpi, besonders bevorzugt mit 50 hpi, hergestellt sind.

6. Mehrschichtiger Schallabsorber gemäß einem der Ansprüche 1 bis 5, **dadurch gekennzeichnet, dass** das Strömungsvlies ein Schutzvlies gegen mechanischen Abrieb umfasst, das eine in Durchdringungsrichtung erste Lage des Strömungsvlieses bildet und einen geringeren Strömungswiderstand wie die Strömungseinzellagen aufweist, wobei das Schutzvlies vorzugsweise ein Spinnvlies oder ein Melt-Blown Vlies mit vollflächiger Kalandrierung ist und weiter vorzugsweise mit einem geringen Strömungswiderstand unter 500 Pa s/m, besonders vorzugsweise unter 200 Pa s/m, ausgebildet ist.

7. Mehrschichtiger Schallabsorber gemäß einem der Ansprüche 1 bis 6, **dadurch gekennzeichnet, dass** das Strömungsvlies mindestens drei Strömungseinzellagen umfasst, wobei der Unterschied zwischen den Strömungswiderständen aneinander angrenzender Strömungseinzellagen in Durchdringungsrichtung abnimmt.

8. Mehrschichtiger Schallabsorber gemäß einem der Ansprüche 1 bis 7, **dadurch gekennzeichnet, dass** die Strömungseinzellagen des Strömungsvlieses nur bereichsweise miteinander verbunden sind, sodass Kavitäten zwischen den Strömungseinzellagen bestehen, wobei die Strömungseinzellagen vorzugsweise mittels eines Kalander verbunden sind, der eine Verpressfläche von 0,3 bis 5%, noch bevorzugter von 0,4 bis 3%, und noch bevorzugter von 0,6 bis 1,2 %, aufweist, wobei die Strömungseinzellagen des Strömungsvlieses weitervorzugsweise an voneinander beabstandeten Gravurpunkten, die ein Muster bilden, durch den Kalander verbunden sind.

9. Mehrschichtiger Schallabsorber gemäß einem der Ansprüche 1 bis 8, **dadurch gekennzeichnet, dass** der mehrschichtige Schallabsorber neben dem Strömungsvlies ein Trägervlies aufweist, wobei das Trägervlies in Durchdringungsrichtung auf eine Rückseite des Strömungsvlieses kaschiert ist und zumindest erste Fasern mit einem Titer von 3 bis 28 dtex und zweite Fasern mit einem Titer von 0,5 bis 3 dtex umfasst.

10. Mehrschichtiger Schallabsorber gemäß Anspruch 9, **dadurch gekennzeichnet, dass** das Trägervlies thermisch verfestigt und/oder mechanisch verfestigt ist und/oder ein Flächengewicht zwischen 200 und 1.200 g/m², vorzugsweise zwischen 200 und 600 g/m², aufweist.

11. Mehrschichtiger Schallabsorber gemäß einem der Ansprüche 1 bis 10, **dadurch gekennzeichnet, dass** der mehrschichtige Schallabsorber aus nur einem Ausgangsmaterial, vorzugsweise aus PET oder PBT, besteht.

12. Mehrschichtiger Schallabsorber gemäß einem der Ansprüche 1 bis 11, **dadurch gekennzeichnet, dass** der mehrschichtige Schallabsorber eine Gesamtdicke zwischen 5 und 50 mm, vorzugsweise zwischen 8 und 35 mm, besonders bevorzugt zwischen 10 und 25 mm, aufweist.

13. Verfahren zur Herstellung eines mehrschichtigen Schallabsorbers nach einem der Ansprüche 1 bis 12, wobei die Strömungseinzellagen des Strömungsvlieses nach ihrer Fertigung in der Durchdringungsrichtung übereinander angeordnet werden und derart nur bereichsweise miteinander verbunden werden, dass Kavitäten zwischen den Strömungseinzellagen vorhanden bleiben.

14. Verwendung eines mehrschichtigen Schallabsorbers nach einem oder mehreren der Ansprüche 1 bis 13 zur Schallabsorption im Automobilbereich.

15. Verwendung eines mehrschichtigen Schallabsorbers nach einem oder mehreren der Ansprüche 1 bis 13 zur Schallisolierung im Bau- und Raumakustik-Bereich.
